# EUROPEAN PATENT SPECIFICATION

(11) **EP 2 703 670 B1**
(45) Date of publication and mention of the grant of the patent: **27.09.2017**
(21) Application number: 13181649.8
(22) Date of filing: 26.08.2013
(51) Int. Cl.: F16D 1/08, F16D 7/02

(54) **Torque limiter**
Drehmomentbegrenzer
Limiteur de couple

(30) Priority: 27.08.2012 JP 2012186230
(43) Date of publication of application: 05.03.2014
(73) Proprietor: JTEKT Corporation, Osaka-shi Osaka 542-8502 (JP)
(72) Inventor: Nagayama, Akihide, Osaka-shi, Osaka 542-8502 (JP)
(74) Representative: Winter, Brandl, Fürniss, Hübner, Röss, Kaiser, Polte - Partnerschaft mbB

(56) References cited:
- DE-U1- 8 633 885
- GB-A- 2 023 250
- US-A- 3 906 999
- US-A1- 2005 194 051

## Description

### BACKGROUND OF THE INVENTION

### 1. Field of the Invention

The invention relates to a torque limiter.

### 2. Description of Related Art

In DE 86 33 885 U1 a safety coupling is described, which has a release valve to interrupt the torque transmission in the case of overloading. GB 2 023 250 A discloses a coupling that works similarly to the one disclosed in DE 86 33 885 U1. A conventional torque limiter is described in, for example, Japanese Patent Application Publication No. 2009-293680 (JP 2009-293680 A). The torque limiter is configured as follows. An inner peripheral face of a tubular member is fitted to an outer peripheral face of a shaft member. Hydraulic fluid is supplied to a hydraulic passage of the tubular member. The inner peripheral face of the tubular member is reduced in diameter by the hydraulic fluid in the hydraulic passage, so that the inner peripheral face of the tubular member is pressed against the outer peripheral face of the shaft member. In this way, the shaft member is brought into friction connection with the tubular member to transmit torque between the shaft member and the tubular member. While the hydraulic fluid in the hydraulic passage is sealed by a shear tube, an engaging member engaged with an end portion of the shear tube is fixed to the shaft member.

When a load equal to or higher than a predetermined value is applied to the shaft member or the tubular member and therefore the inner peripheral face of the tubular member slips with respect to the outer peripheral face of the shaft member, the position of the shaft member about the axis is changed with respect to the tubular member. At this time, distal end-side pins of shear valves are cut by the engaging member, so that the hydraulic fluid is discharged from the hydraulic passage to the outside. This cancels the friction connection between the shaft member and the tubular member, thereby interrupting transmission of torque between the shaft member and the tubular member.

The conventional torque limiter is provided with a scattering prevention cover arranged radially outward of the shear valves. With this configuration, when a load equal to or higher than the predetermined value is applied to the shaft member or the tubular member, the pins of the shear valves that are broken due to the application of the load are prevented from being scattered far.

However, with the conventional torque limiter, when a recovery work is performed after interruption of the transmission of torque, a work for sliding the scattering prevention cover, removal of the pins of the shear valves, and replacement of the shear valves at multiple locations in the circumferential direction are required. Therefore, the recovery work needs to be performed in three steps. As a result, it takes a long time to perform the recovery work.

Further, every time the recovery work is performed, the shear valves need to be replaced with new ones at the multiple locations in the circumferential direction. This increases cost for the recovery work. Further, the pins are broken into small pieces in some cases. In such a case, it takes a longer time to perform the recovery work. Further state of the art is known from US 3 906 999 A and US 2005/194051 A1 that disclose different types of valves.

### SUMMARY OF THE INVENTION

One object of the invention is to provide a torque limiter that makes it possible to perform recovery quickly and to reduce the cost for the recovery.

This object is achieved by the torque limiter according to the claims. An aspect of the invention relates to a torque limiter including: a shaft member; and a tubular member rotatably fitted onto the shaft member. One of the tubular member and the shaft member has: a fluid pressure expansion chamber configured to press a peripheral face of the one of the tubular member and the shaft member against a peripheral face of the other one of the tubular member and the shaft member; a discharge passage that provides communication between the fluid pressure expansion chamber and an outside, and that has a valve seat; and a valve element arranged on the valve seat in the discharge passage. When the tubular member rotates relative to the shaft member from a state where the tubular member is stationary with respect to the shaft member, the valve element is displaced from a first position for maintaining a fluid pressure in the fluid pressure expansion chamber to a second position for discharging liquid from the fluid pressure expansion chamber to the outside.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a schematic sectional view of a torque limiter according to an embodiment of the invention, taken along its axial direction; and
FIG. 2 is a schematic sectional view of the torque limiter in a radial direction, which passes through the center of a valve.

### DETAILED DESCRIPTION OF EMBODIMENTS

Hereinafter, embodiments of the invention will be described in detail with reference to the accompanying drawings.

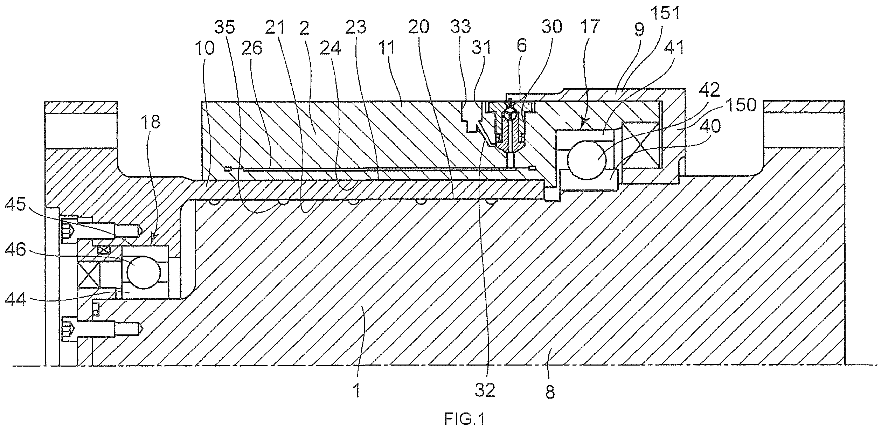

FIG. 1 is a schematic sectional view of a torque limiter according to an embodiment of the invention, taken along its axial direction.

The torque limiter includes a shaft member 1 that is an example of a connection member, a tubular member 2, a valve 6, a ball bearing 17, and a ball bearing 18.

The shaft member 1 has a body portion 8 and a projecting press portion 9. The body portion 8 has an outer peripheral face 20 having a substantially cylindrical shape. The projecting press portion 9 has a substantially L-shaped section, and projects from an outer face of the body portion 8. The outer peripheral face 20 of the shaft member 1 has one oil seal prevention groove 35 having a spiral shape. The spiral-shaped oil seal prevention groove 35 is opened at both sides of the shaft member 1 in its axial direction. The pitch of the spiral-shaped oil seal prevention groove 35 is equal to or smaller than one-fifth of the shaft diameter (outside diameter) of the shaft member 1. The oil seal prevention groove 35 has a function of discharging excess (redundant) seizure prevention lubricant that is present between the shaft member 1 and the tubular member 2, to the outside via openings of the oil seal prevention groove 35 during transmission of torque. Thus, it is possible to prevent the release torque from falling below a predetermined value (designed value), so that the release torque is maintained at a value substantially equal to the designed value.

The tubular member 2 is formed of a first tubular member 10 and a second tubular member 11. The first tubular member 10 has a substantially cylindrical inner peripheral face 21 that contacts the outer peripheral face 20 of the shaft member 1. The seizure prevention lubricant is applied between the outer peripheral face 20 of the shaft member 1 and the inner peripheral face 21 of the first tubular member 10. The second tubular member 11 has a substantially cylindrical inner peripheral face 24. The inner peripheral face 24 contacts a substantially cylindrical outer peripheral face 23 of the first tubular member 10. Further, the second tubular member 11 has a valve fitting hole 30 and a hydraulic pressure expansion chamber 26. The hydraulic pressure expansion chamber 26 extends almost over the entire axial length of the inner peripheral face 24 of the second tubular member 11, along the axial direction of the shaft member 1. The hydraulic pressure expansion chamber 26 is an annular chamber. The hydraulic pressure expansion chamber 26 constitutes a fluid pressure expansion chamber.

The valve 6 is fitted in the valve fitting hole 30. The projecting press portion 9 having a substantially L-shaped section has a radially extending portion 150 and an axially extending portion 151. The radially extending portion 150 extends substantially radially, and is axially opposed to an end face of the second tubular member 11. Further, the axially extending portion 151 is connected to the radially extending portion 150, and extends axially along an outer peripheral face of the second tubular member 11.

As illustrated in FIG. 1, the second tubular member 11 has a socket structure 33 for a fluid pressure coupler. The socket structure 33 has a hole 31 and an oil sealing passage 32 as a fluid channel. One end of the oil sealing passage 32 is opened at a side face of the hole 31.

When oil, which is an example of fluid, is sealed in the hydraulic pressure expansion chamber 26, the other end of the oil sealing passage 32 communicates with the hydraulic pressure expansion chamber 26. The torque limiter includes a known fluid pressure coupler. The fluid pressure coupler includes a male coupler and a female coupler. The female coupler is fixed to the socket structure 33. The torque limiter is configured such that when the oil is sealed in the hydraulic pressure expansion chamber 26, the male coupler is inserted into the female coupler fixed to the socket structure 33, so that the oil is sealed into the hydraulic pressure expansion chamber 26 from the male coupler via the female coupler and the oil sealing passage 32.

The ball bearing 17 includes an inner ring 40, an outer ring 41, and balls 42. The inner ring 40 is fixedly fitted to an outer face of the shaft member 1. The outer ring 41 is fixedly fitted to an inner face of the second tubular member 11. The balls 42 are arranged between a raceway surface of the inner ring 40 and a raceway surface of the outer ring 41. The ball bearing 18 includes an inner ring 44, an outer ring 45, and balls 46. The inner ring 44 is fixedly fitted to the outer face of the shaft member 1. The outer ring 45 is fixedly fitted to an inner face of the first tubular member 10. The balls 46 are arranged between a raceway surface of the inner ring 44 and a raceway surface of the outer ring 45. The ball bearings 17, 18 support the shaft member 1 such that the shaft member 1 is rotatable relative to the tubular member 2.

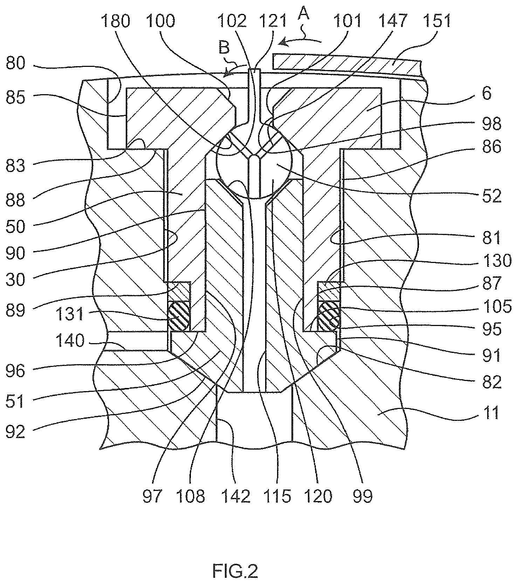

FIG. 2 is a schematic sectional view of the torque limiter in a radial direction, which passes through the center of the valve 6.

As illustrated in FIG. 2, the valve fitting hole 30 has a first cylindrical hole 80, a threaded hole 81, a second cylindrical hole 95, and a tapered hole 82. The first cylindrical hole 80 of the valve fitting hole 30 has an opening opened radially outward. The inside diameter of the first cylindrical hole 80 is larger than the inside diameter of the threaded hole 81. The central axis of the first cylindrical hole 80 substantially coincides with the central axis of the threaded hole 81. A radially outward end portion of the threaded hole 81 is connected to a radially inward end portion of the first cylindrical hole 80 via a planar step portion 83 that extends in the axial direction.

A radially outward end portion of the second cylindrical hole 95 is connected to a radially inward end portion of the threaded hole 81. A radially outward end portion of the tapered hole 82 is connected to a radially inward end portion of the second cylindrical hole 95. The inside diameter of the tapered hole 82 is reduced in the radially inward direction.

The valve 6 is fitted in the valve fitting hole 30. The valve 6 has a tubular first member 50, a second member 51 that is a shaft member, and a valve element 52. The first member 50 has a first cylindrical outer peripheral face 85, an external threaded portion 86, and a second cylindrical outer peripheral face 87. The outside diameter of the first cylindrical outer peripheral face 85 is larger than the outside diameter of the external threaded portion 86. The outside diameter of the external threaded portion 86 is larger than the outside diameter of the second cylindrical outer peripheral face 87.

A radially outward end portion of the external threaded portion 86 is connected to a radially inward end portion of the first cylindrical outer peripheral face 85 via a planar step portion 88 that extends in the axial direction. A radially outward end portion of the second cylindrical outer peripheral face 87 is connected to a radially inward end portion of the external threaded portion 86 via a planar step portion 89 that extends in the axial direction. The outside diameter of the first cylindrical outer peripheral face 85 is smaller than the inside diameter of the first cylindrical hole 80, but is larger than the inside diameter of the threaded hole 81. An end face 96 of the first member 50, which is on the second cylindrical outer peripheral face 87 side in the radial direction, is formed of a plane that includes the axial direction.

The first member 50 has a through-hole 97 that extends along its central axis. The through-hole 97 has a first hole 98 having a substantially sandglass shape and a second hole 99 having a cylindrical shape. The second hole 99 is connected to the first hole 98. The first hole 98 has an opening opened radially outward. The first hole 98 has a first tapered hole 100, a cylindrical hole 101, and a second tapered hole 102. The inside diameter of the first tapered hole 100 is reduced in the radially inward direction. A radially outward end portion of the cylindrical hole 101 is connected to a radially inward end portion of the first tapered hole 100. Further, a radially outward end portion of the second tapered hole 102 is connected to a radially inward end portion of the cylindrical hole 101.

The inside diameter of the second tapered hole 102 increases in the radially inward direction. The inside diameter of a radially inward end portion of the second tapered hole 102 is equal to the inside diameter of the second hole 99. A radially outward end portion of the second hole 99 is connected to the radially inward end portion of the second tapered hole 102.

The second member 51 has a first cylindrical outer peripheral face 90, a second cylindrical outer peripheral face 91, and a tapered outer peripheral face 92. The central axis of the first cylindrical outer peripheral face 90 substantially coincides with the central axis of the second cylindrical outer peripheral face 91. The outside diameter of the first cylindrical outer peripheral face 90 is smaller than the outside diameter of the second cylindrical outer peripheral face 91. A radially outward end portion of the second cylindrical outer peripheral face 91 is connected to a radially inward end portion of the first cylindrical outer peripheral face 90 via a planar step portion 105 that extends in the axial direction. A radially outward end portion of the tapered outer peripheral face 92 is connected to a radially inward end portion of the second cylindrical outer peripheral face 91.

The first cylindrical outer peripheral face 90 is fixedly fitted in the second hole 99 of the first member 50 by press-fitting. The second cylindrical outer peripheral face 91 is fixedly fitted to the inner peripheral face of the second cylindrical hole 95. The tapered outer peripheral face 92 has a shape corresponding to the tapered hole 82. An end face of the second member 51, which is on the first cylindrical outer peripheral face 90 side in the axial direction, is formed of a tapered outer peripheral face 108. The second member 51 has a through-hole 115 that extends along its central axis.

As illustrated in FIG. 2, the valve element 52 has a flask-shaped section. The valve element 52 has a ball-shaped body portion 120 and a projecting portion 121. The projecting portion 121 extends radially outward from a part of the surface of the body portion 120. The valve element 52 has a Y-shaped passage 147 having three openings. The Y-shaped passage 147 is located on a plane that passes through the center of the ball-shaped body portion 120.

The second member 51 is arranged in the valve fitting hole 30 such that the tapered outer peripheral face 92 of the second member 51 contacts the tapered hole 82 of the valve fitting hole 30. Subsequently, in a state where the projecting portion 121 faces outward in the radial direction, the ball-shaped body portion 120 of the valve element 52 is arranged on the tapered outer peripheral face 108 of the second member 51 so as to make line contact with the tapered outer peripheral face 108.

Then, a back-up ring 130 and an O-ring 131 are arranged radially outward of the second cylindrical outer peripheral face 87 of the first member 50 at such a position that the back-up ring 130 and the O-ring 131 overlap with the step portion 89 in the axial direction of the step portion 89. The first member 50 is then inserted into the valve fitting hole 30 from its second cylindrical outer peripheral face 87 side. The threaded portion 86 of the first member 50 is screwed into the threaded hole 81 such that the projecting portion 121 of the valve element 52 projects from an opening of the first hole 98 of the first member 50. In this way, the end face 96 of the first member 50 is brought into contact with the step portion 105 of the second member 51, and the step portion 88 of the first member 50 is tightened to the step portion 83 of the valve fitting hole 30.

As illustrated in FIG. 2, in a state where the projecting portion 121 of the valve element 52 faces outward in the radial direction, the through-hole 115 of the second member 51 communicates with an oil passage 142 connected to the hydraulic pressure expansion chamber 26. Further, the Y-shaped passage 147 of the valve element 52 communicates with the through-hole 115 of the second member 51. Note that in the state where the valve 6 is arranged at a predetermined position within the valve fitting hole 30, as illustrated in FIG. 2, the through-hole 97 of the first member 50, the through-hole 115 of the second member 51, and the oil passage 142 of the second tubular member 11 constitute a discharge passage.

When the oil is introduced into the hydraulic pressure expansion chamber 26, the first member 50 is loosened, and, with the use of the fluid pressure coupler, the oil that has passed through an oil filler port 140 is caused to flow between the tapered outer peripheral face 92 of the second member 51 and the tapered hole 82 and is then introduced into the hydraulic pressure expansion chamber 26 through the oil passage 142. After the oil pressure in the hydraulic pressure expansion chamber 26 reaches a predetermined oil pressure, the first member 50 is tightened to achieve metal contact between the tapered outer peripheral face 92 of the second member 51 and the tapered hole 82. In this way, oil leakage from the hydraulic pressure expansion chamber 26 is prevented.

The back-up ring 130 and the O-ring 131 have a function of preventing the oil supplied through the oil filler port 140 from leaking radially outward when the oil is supplied from the fluid pressure coupler.

In the above configuration, in a case where a load equal to or lower than a predetermined value (a load within a range in which transmission of torque is allowed) is applied to the shaft member 1 and the tubular member 2, the projecting portion 121 of the valve element 52 projects radially outward. One of the openings of the Y-shaped passage 147 of the valve element 52 communicates with the through-hole 115 of the second member 51. In the meantime, the other two openings of the Y-shaped passage 147 are pressed against a valve seat 180 formed of a substantially circular portion of the second tapered hole 102 which makes metal contact with the ball-shaped body portion 120. Note that in this state, a plane including the valve seat 180 includes the axial direction, and the valve element 52 is located at a first position.

Thus, oil leakage from the two openings of the Y-shaped passage 147 is prevented. The inner peripheral face 21 of the first tubular member 10 is reduced in diameter by the oil for hydraulic pressure expansion, which is introduced into the hydraulic pressure expansion chamber 26 by the fluid pressure coupler. In this way, the inner peripheral face 21 is pressed against the outer peripheral face 20 of the shaft member 1. This causes the shaft member 1 to make friction connection with the tubular member 2, so that torque is transmitted between the shaft member 1 and the tubular member 2.

On the other hand, when a load equal to or higher than the predetermined value (a load that is higher than the upper limit of the range in which transmission of torque is allowed) is applied to the shaft member 1 or the tubular member 2, the outer peripheral face 20 of the shaft member 1 slips with respect to the inner peripheral face 21 of the first tubular member 10. If the slip changes the positions of the shaft member 1 and the tubular member 2 about the axis, the axially extending portion 151 of the projecting press portion 9 moves in a circumferential direction as indicated by an arrow A in FIG. 2. As a result, the projecting portion 121 of the valve element 52 is pressed in the circumferential direction by the distal end of the axially extending portion 151. In this way, the projecting portion 121 of the valve element 52 is rotated in a direction as indicated by an arrow B in FIG. 2 with respect to the center of the ball-shaped body portion 120. As a result, the valve element 52 is located at a second position (an unspecified position that is different from the first position) offset from the first position. Then, the metal contact between the body portion 120 and the second tapered hole 102 is cancelled, so that the oil for hydraulic pressure expansion in the hydraulic pressure expansion chamber 26 is discharged to the outside through the Y-shaped passage 147 of the valve element 52. Thus, a pressing force that is applied from the inner peripheral face 21 of the first tubular member 10 to the outer peripheral face 20 of the shaft member 1 is eliminated to cancel the friction connection between the shaft member 1 and the tubular member 2. Thus, transmission of torque is interrupted. As a result, an expensive machine connected to a torque limiter is protected.

With the torque limiter in the above-described embodiment, just by changing the position of the valve element 52 from the first position for maintaining the oil pressure in the hydraulic pressure expansion chamber 26, to the second position for discharging the oil in hydraulic pressure expansion chamber 26 to the outside, it is possible to cancel frictional engagement between the tubular member 2 and the shaft member 1. Thus, no component is broken when the frictional engagement between the tubular member 2 and the shaft member 1 is cancelled. Therefore, removal of scattered pieces of broken component and replacement of the broken component with new ones are no longer necessary. As a result, it is possible to perform recovery just by placing the valve element 52 at the first position, and thus, it is possible to perform a recovery work quickly.

With the torque limiter in the above-described embodiment, because no component is broken when the frictional engagement between the tubular member 2 and the shaft member 1 is cancelled, it is not necessary to replace the broken component to a new one at the time of recovery. This makes it possible to reduce the cost required for the recovery. Further, a cover member that prevents the broken component from being scattered far is no longer necessary. This also makes it possible to reduce the production cost.

With the torque limiter in the above-described embodiment, because the part of the valve element 52, which makes contact with the valve seat, is the ball-shaped body portion 120 that is smooth and easy to be displaced, it is possible to displace the valve element 52 easily. This makes it possible to smoothly switch the state between the state where torque transmission is allowed and the state where torque transmission is interrupted, and to perform recovery easily.

With the torque limiter in the above-described embodiment, it is possible to press the projecting portion 121 of the valve element 52 in the circumferential direction with the use of the distal end of the axially extending portion 151 of the projecting press portion 9 when transmission of torque is interrupted. This makes it possible to realize a configuration for displacing the valve element 52 easily.

Note that, in the torque limiter in the above-described embodiment, the oil seal prevention groove 35 that is opened at the both axial sides of the shaft member 1 is formed in the outer peripheral face 20 of the shaft member 1. However, in the invention, an oil seal prevention groove that is opened at both axial sides of the shaft member 1 may be formed in the inner peripheral face of the tubular member which makes contact with the outer peripheral face of the shaft member to transmit torque. Alternatively, an oil seal prevention groove that is opened at both sides in the axial direction of the shaft member may be formed in each of the outer peripheral face of the shaft member and the inner peripheral face of the tubular member which makes contact with the outer peripheral face of the shaft member to transmit torque. Further, in the invention, no oil seal prevention groove may be formed.

In the torque limiter in the above-described embodiment, the tubular member is formed of the first tubular member 10 and the second tubular member 11. The first tubular member 10 has the inner peripheral face 21 that makes contact with the outer peripheral face 20 of the shaft member 1. The second tubular member 11 has the hydraulic pressure expansion chamber 26 in which the oil for hydraulic pressure expansion is sealed. However, in the invention, the tubular member may be a single-piece tubular member having an inner peripheral face that makes contact with the outer peripheral face of the shaft member and a hydraulic passage in which the oil for hydraulic pressure expansion is sealed.

In the torque limiter in the above-described embodiment, the lubricant applied between the outer peripheral face 20 of the shaft member 1 and the inner peripheral face 21 of the tubular member 2 may be traction oil. Alternatively, the lubricant may be lubricants other than the traction oil, such as paraffin mineral oil (turbine oil) and hindered ester.

In the torque limiter in the above-described embodiment, the fluid pressure expansion chamber is the hydraulic pressure expansion chamber 26, and the fluid introduced into the fluid pressure expansion chamber is oil. However, in the invention, the fluid introduced into the fluid pressure expansion chamber may be any liquids other than the oil.

In the torque limiter in the above-described embodiment, the hydraulic pressure expansion chamber 26 and the valve fitting hole 30 are formed in the tubular member 2, and the valve fitting hole 30 is opened radially outward. However, in the invention, the fluid pressure expansion chamber and the valve fitting hole may be formed in the shaft member. Note that, in this case, the valve fitting hole may be formed so as to be opened at an axial end face, for example. In this case, the projecting press portion is configured to be connected to the tubular member and to have a portion radially extending along the axial end face of the shaft member, and the projecting portion of the valve element which is arranged in the valve fitting hole and the projecting press portion are configured to overlap with each other in the circumferential direction in a state where torque is transmitted.

In the torque limiter in the above-described embodiment, the valve element 52 has the ball-shaped body portion 120 and the projecting portion 121. However, in the invention, the valve element may have a shape other than this. For example, in the invention, the valve element may have a columnar body portion and a projecting portion projecting from a side face of the body portion, and metal contact may be achieved between a cylindrical side face of this columnar body portion and two planar inner faces of the tubular member having a polygonal section.

According to the invention, it is possible to obtain a torque limiter that makes it possible to perform recovery quickly and to reduce the cost for the recovery.

## Claims

1. A torque limiter, comprising:
a shaft member (1); and
a tubular member (2) rotatably fitted onto the shaft member (1), wherein
the tubular member (2) has:
a fluid pressure expansion chamber (26) configured to press a peripheral face of the one of the tubular member (2) and the shaft member (1) against a peripheral face of the other one of the tubular member (2) and the shaft member (1);
a discharge passage that provides communication between the fluid pressure expansion chamber (26) and an outside, and that has a valve seat (180); and
a valve element (52) arranged on the valve seat (180) in the discharge passage, wherein
when the tubular member (2) rotates relative to the shaft member (1) from a state where the tubular member (2) is stationary with respect to the shaft member (1), the valve element (52) is displaced from a first position for maintaining a fluid pressure in the fluid pressure expansion chamber (26) to a second position for discharging liquid from the fluid pressure expansion chamber (26) to the outside, wherein the valve element (52) has a body portion(120); and when the body portion (120) makes metal contact with the valve seat (180) at the first position, the fluid pressure in the fluid pressure expansion chamber (26) is maintained, the valve element (52) has a projecting portion (121) that projects from an outer face of the body portion (120), and that projects outward in a radial direction of the tubular member (2) in a state where the fluid pressure in the fluid pressure expansion chamber (26) is maintained, **characterized in that**
the shaft member (1) has a projecting press portion (9) that overlaps with the projecting portion (121) in a circumferential direction if seen in the longitudinal direction; and
when the tubular member (2) rotates relative to the shaft member (1), the projecting press portion (9) presses the projecting portion (121) to displace the projecting portion (121) in the circumferential direction, so that the valve element (52) is moved from the first position to the second position.

2. The torque limiter according to claim 1, wherein:
the valve element (52) has a ball-shaped body portion (120).

## Patentansprüche

1. Drehmomentbegrenzer, mit:
einem Wellenteil (1); und
einem rohrförmigen Teil (2); das drehbar auf das Wellenteil (1) angepasst ist, wobei
das rohrförmige Teil (2):
eine Fluiddruckexpansionskammer (26), die dazu ausgelegt ist, eine Umfangsfläche von dem rohrförmigen Teil (2) oder dem Wellenteil (1) gegen eine Umfangsfläche des jeweils anderen Teils zu drücken;
einen Ausstoßkanal, der die Kommunikation zwischen der Fluiddruckexpansionskammer (26) und draußen bereitstellt, und der einen Ventilsitz (180) aufweist; und
ein Ventilelement (52) aufweist, welches auf dem Ventilsitz (180) in dem Ausstoßkanal angeordnet ist, wobei
wenn sich das rohrförmige Teil (2) ausgehend von einem Zustand, in dem das rohrförmige Teil (2) bezüglich des Wellenteils (1) stationär/stehend ist, relativ zu dem Wellenteil (1) dreht, wird das Ventilelement (52) von einer ersten Position zum Erhalten eines Fluiddrucks in der Fluiddruckexpansionskammer (26) in eine zweite Position zum Ausstoßen von Flüssigkeit aus der Fluiddruckexpansionskammer (26) nach draußen verschoben, wobei das Ventilelement (52) einen Körperabschnitt (120) aufweist; und wenn der Körperabschnitt (120) mit dem Ventilsitz (180) an einer ersten Position in metallischen Kontakt kommt, wird der Fluiddruck in der Fluidruckexpansionskammer (26) erhalten,
das Ventilelement (52) einen vorstehenden Abschnitt (121) aufweist, der von einer Außenfläche des Körperabschnitts (120) vorsteht, und der in einer Radialrichtung des rohrförmigen Teils (2) in einem Zustand nach außen vorsteht, in dem der Fluiddruck in der Fluiddruckexpansionskammer (26) gehalten wird, **dadurch gekennzeichnet, dass**
das Wellenteil (1) eine vorstehenden Druckabschnitt (9) aufweist, der sich mit dem vorstehenden Abschnitt (121), wenn in Längsrichtung betrachtet, in einer Umfangsrichtung überlappt; und
wenn das rohrförmige Teil (2) relativ zu dem Wellenteil (1) rotiert, der vorstehende Druckabschnitt (9) den vorstehenden Abschnitt (121) drückt, um den vorstehenden Abschnitt (121) in der Umfangsrichtung zu verschieben, so dass das Ventilelement (52) von der ersten Position in die zweite Position bewegt wird.

2. Drehmomentbegrenzer gemäß Anspruch 1, wobei:
das Ventilelement (52) einen kugelförmigen Körperabschnitt (120) aufweist.

## Revendications

1. Limiteur de couple comprenant :
un élément d'arbre (1) ; et
un élément tubulaire (2) monté, en rotation, sur l'élément d'arbre (1), dans lequel :
l'élément tubulaire (2) a :
une chambre d'expansion de pression de fluide (26) configurée pour comprimer une face périphérique de l'un parmi l'élément tubulaire (2) et l'élément d'arbre (1) contre une face périphérique de l'autre parmi l'élément tubulaire (2) et l'élément d'arbre (1) ;
un passage de décharge qui fournit la communication entre la chambre d'expansion de pression de fluide (26) et un extérieur, et qui a un siège de soupape (180) ; et
un élément de soupape (52) agencé sur le siège de soupape (180) dans le passage de décharge, dans lequel :
lorsque l'élément tubulaire (2) tourne par rapport à l'élément d'arbre (1) d'un état dans lequel l'élément tubulaire (2) est fixe par rapport à l'élément d'arbre (1), l'élément de soupape (52) est déplacé d'une première partie pour maintenir la pression de fluide dans la chambre d'expansion de pression de fluide (26) à une seconde position pour décharger le liquide de la chambre d'expansion de pression de fluide (26) à l'extérieur, dans lequel l'élément de soupape (52) a une partie de corps (120) ; et lorsque la partie de corps (120) établit le contact métallique avec le siège de soupape (180) dans la première position, la pression de fluide dans la chambre d'expansion de pression de fluide (26) est maintenue,
l'élément de soupape (52) a une partie en saillie (121) qui fait saillie à partir d'une face externe de la partie de corps (120), et qui fait saillie vers l'extérieur dans une direction radiale de l'élément tubulaire (2) dans un état dans lequel la pression de fluide dans la chambre d'expansion de pression de fluide (26) est maintenue, **caractérisé en ce que** :
l'élément d'arbre (1) a une partie de pression en saillie (9) qui recouvre la partie en saillie (121) dans une direction circonférentielle si elle est observée dans la direction longitudinale ; et
lorsque l'élément tubulaire (2) tourne par rapport à l'élément d'arbre (1), la partie de pression en saillie (9) comprime la partie en saillie (121) pour déplacer la partie en saillie (121) dans la direction circonférentielle, de sorte que l'élément de soupape (52) passe de la première position à la seconde position.

2. Limiteur de couple selon la revendication 1, dans lequel :
l'élément de soupape (52) a une partie de corps en forme de bille (120).
